# EUROPÄISCHE PATENTSCHRIFT

(11) **EP 1 512 262 B1**
(45) Veröffentlichungstag und Bekanntmachung des Hinweises auf die Patenterteilung: **12.10.2005**
(21) Anmeldenummer: 02764581.1
(22) Anmeldetag: 07.06.2002
(51) Int. Cl.: H04L 29/06, H04Q 7/30

(54) **Verfahren und Vorrichtung zum Übertragen von IP-Paketen zwischen einem Radio Network Controller (RNC) und einer weiteren Einrichtung eines Mobilfunknetzes**
Method and device for transmitting IP-packets between a Radio Network Controller (RNC) and another element of a mobile radio network
Procedé et dispositif de transmission de paquets IP entre un controleur de réseau radio (RNC) et un autre élément d'un réseau radio mobile

(43) Veröffentlichungstag der Anmeldung: 09.03.2005
(73) Patentinhaber: SIEMENS AKTIENGESELLSCHAFT, 80333 München (DE)
(72) Erfinder: REITTER, Johann, A-4880 Berg im Attergau (AT); VESELY, Alexander, A-1170 Wien (AT)
(86) Internationale Anmeldenummer: PCT/EP2002/006268
(87) Internationale Veröffentlichungsnummer: WO 2003/105435

(56) Entgegenhaltungen:
- WO-A-01/72057
- WO-A-01/78430
- WO-A-02/15627
- WO-A-99/60742

## Beschreibung

Die Erfindung betrifft ein Verfahren und eine Vorrichtung in einem mobilen Kommunikationsnetzwerk mit dem bei zu übertragenden IP-Paketen zwischen Mobilfunkteilnehmern zentral Codec-Mode Wechsel durchgeführt werden.

Aufgabe der vorliegenden Erfindung, ein Verfahren und eine Vorrichtung der eingangs genannten Art dahingehend zu optimieren, dass eine Verringerung der Signalisierungslast durch eine zentrale Behandlung von Codec Mode Wechseln erzielt wird.

Diese Aufgabe wird erfindungsgemäß durch die Gegenstände der unabhängigen Patentansprüche bezüglich des Verfahrens und der Vorrichtung gelöst. Weiterbildungen der Erfindung sind in den Unteransprüchen angegeben. Die erfindungsgemäße Übertragung von IP Paketen zwischen einem Radio Network Controller (RNC) und einer weiteren Einrichtung eines Mobilfunknetzwerkes hat den Vorteil, dass der Radio Network Controller nicht die Codec(s) Mode(s) kennen muss, die es derzeit gibt und künftig geben wird. Damit entfällt ein Software Update bei den Radio Network Controllern (RNC). Der RNC (2) muss ein IP Paket (user level IP Paket), dass vollständig als Daten gesehen wird, öffnen. Somit muss der RNC (2) nicht wissen, wie die Daten strukturiert sind. Der RNC (2) muss ebenso nicht wissen, welcher RTP Protokoll header, IP Protokoll header, UDP Protokoll header und RTP payload header verwendet wird.

Das Dokument D1=WO0172057 wird als nächstliegender Stand der Technik und offenbart ein System und ein Verfahren zur Weiterleitung der Codec-Mode-Angaben (TFCI, AMR) von einem Mobilen Endgerät zu anderem, indem man diese Angaben über einen zusätzlichen Kontrollkanal umleitet.

Die Erfindung wird anhand eines in Figuren dargestellten Ausführungsbeispiels näher erläutert. Im einzelnen zeigen
- Figur 1: eine erfindungsgemäße Netzwerk Architektur mit einer Vorrichtung (DCF) zur Unterstützung eines Codec Mode Wechsel
- Figur 2: den Austausch von Codec und Mode betreffenden Daten bei einem Anruf
- Figur 3: die Einbindung des Access Netzwerks
- Figur 4: die Einbindung des Core Netzwerks
- Figur 5: die Struktur eines OCS-Frames (OCSF)
- Figur 6: die Information der verwendeten RAB Teilströme
- Figur 7: die Bearbeitung eines IP-Paketes bei einem Anruf zwischen zwei Mobilen Endgeräten
- Figur 8: die Bearbeitung eines IP-Paketes bei einem Anruf zwischen einer Feststation und einem Mobilen Endgerät
- Figur 9: das Datenpaket an den einzelnen Stationen für einen Anruf zwischen zwei Mobilen Endgeräten
- Figur 10: das Datenpaket an den einzelnen Stationen für einen Anruf zwischen einem Mobilen Endgerät und einer Feststation

Ein IP Paket wird für den Transport zwischen zwei Radio Netzwerk Controllern in ein Optimized Codec Support Frame konvertiert und für den Transport zwischen dem Radio Netzwerk Controller und Mobilen Endgerät aufgeteilt in verschiedene RAB Teilströme.

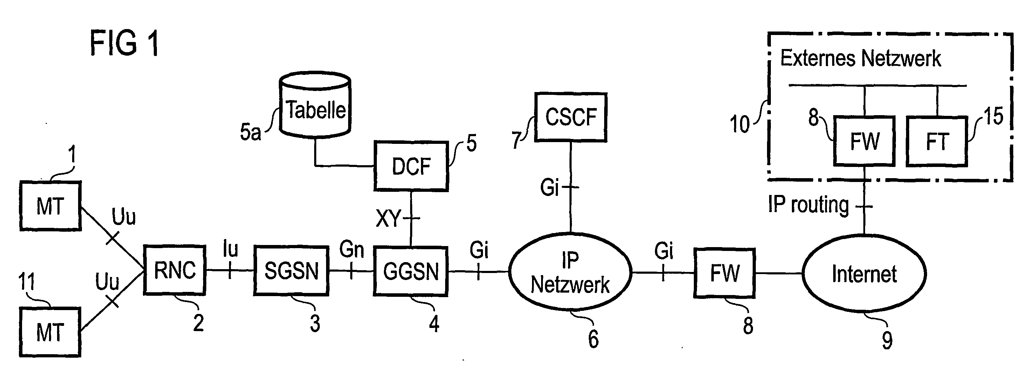

Figur 1 zeigt die Netzwerkarchitektur, die für das Verfahren zum Übertragen von IP-Paketen zwischen Radio Network Controllern (RNC) bei Anrufen zwischen Mobilen Endgeräten Anwendung findet. Von einem ersten mobilen Endgerät (1) gelangt ein IP-Paket (z. B. AMR kodierte Sprache) zum Radio Network-Controller (2), das dort in ein OCS-Frame gekapselt wird und von dort über den Serving GPRS Support Knoten (3) zum Gateway GPRS Support Knoten (4) weitergeleitet wird. Ein mobiles Endgerät (1, 11) stellt ein Mobilfunkgerät, ein Handheld, einen mobilen Computer, eine Kombination der genannten Geräte oder ähnliches dar. Hierfür hat der RNC (2) eine Tabelle, die dynamisch beim Verbindungsaufbau erstellt wird, um den TFCI Wert mit dem korrespondierenden RFCI Wert und den TFCI req. Wert mit dem korrespondierenden RFCI req. Wert austauschen zu können. Dabei wird dem RNC (2) die Information (RANAP: RAB assignment) gegeben, die ihn befähigt, aufgrund der aktuellen Situation auf der Luftschnittstelle, den entsprechenden Codec Mode vorzugeben. Es ist nicht notwendig, dass der RNC (2) den Codec Mode kennt, sehr wohl jedoch die Charakteristiken von diesem (z. B. benötigte Bandbreite). Das OCS Frame hat die Felder RFCI, RFCI req., optionale Felder und das IP Paket, wobei die Reihenfolge der Felder in der Implementierungsphase festgelegt wird. Der Transport erfolgt z. B. mittels eines GTP-U Header, der von dem RNC (2) erstellt wird. Der GGSN (4) gibt das OCS-Frame an die Codec-Mode-Angaben-Austausch-Anordnung (DCF) (5) und diese überprüft anhand einer Tabelle (5a) die verwendeten Codec Mode Angabe und tauscht diese gegebenenfalls durch eine andere aus. Dabei kann das OCS Frame zwischen dem GGSN (4) und der DCF (5) in einem Stück (ein Argument) oder in verschiedenen Argumenten aufgeteilt (RFCI = Argument 1, RFCI req. = Argument 2, IP Paket = Argument 3) transportiert werden. Die Codec-Mode-Angaben-Austausch-Anordnung (DCF) (5) kann als zentrale Einrichtung oder dezentrale Einrichtung in einem Kommunikationsnetzwerk integriert werden. Dabei kann die DCF (5) ein eigener Knoten, eine Einrichtung des GGSN (4) oder eines anderen Knotens sein. Bei einer zentralen DCF (5) wird der RFCI Wert vom Sender auf den RFCI Wert des Empfängers und der RFCI req. Wert des Senders auf den RFCI req. Wert des Empfängers umgewandelt. Eine weitere Aufgabe der DCF (5) ist es den angefragten Codec Mode (dargestellt durch den AMR req. Wert) mit dem RFCI req. Wert zu vergleichen. Sind diese unterschiedlich, tauscht das DCF (5) den AMR req. Wert entsprechend des RFCI req. Wertes aus.
Bei je einer DCF (5) pro GGSN (4) erhält die DCF (5) einen RFCI Wert, einen RFCI req. Wert und das IP Paket vom GGSN (4). Daraufhin vergleicht die DCF (5) den AMR Codec Mode req. mit dem RFCI req. Wert und tauscht den AMR req. Wert aus, wenn die Werte nicht zu einander passen. Für die Empfänger-Richtung wird vom GGSN (4) anhand eines Indikators (z. B. TFT Auswertung) das IP Paket zur DCF (5) weitergeleitet und dort werden der AMR Codec Mode und der AMR Codec Mode req. festgestellt und durch den entsprechenden RFCI Wert und RFCI req. Wert ersetzt. Der Unterschied zwischen einer zentralen und einer dezentralen DCF (5) ist nun, dass bei dezentraler DCF (5) für einen Anruf zwischen zwei Mobilen Endgeräten (1, 11) zweimal ein DCF Aufruf erfolgt. Der Austausch kann z. B. lastabhängig vom RNC (2) an die DCF (5) anhand des RFCI req. Wertes angewiesen werden. Das OCS-Frame wird wieder zum GGSN (4) gesandt und weitergeleitet zu einem Empfänger Mobilen Endgerät (11) über die einzelnen Knoten SGSN (3) und RNC (2). Die Entkapselung geschieht wieder im RNC (2). Ist der Empfänger eine Feststation (15), so wird das IP Paket vom GGSN (4) oder von der DCF (5) selbst über eine Firewall (8), dem Internet (9) und einem externen Netzwerk (10) an diese weitergeleitet.

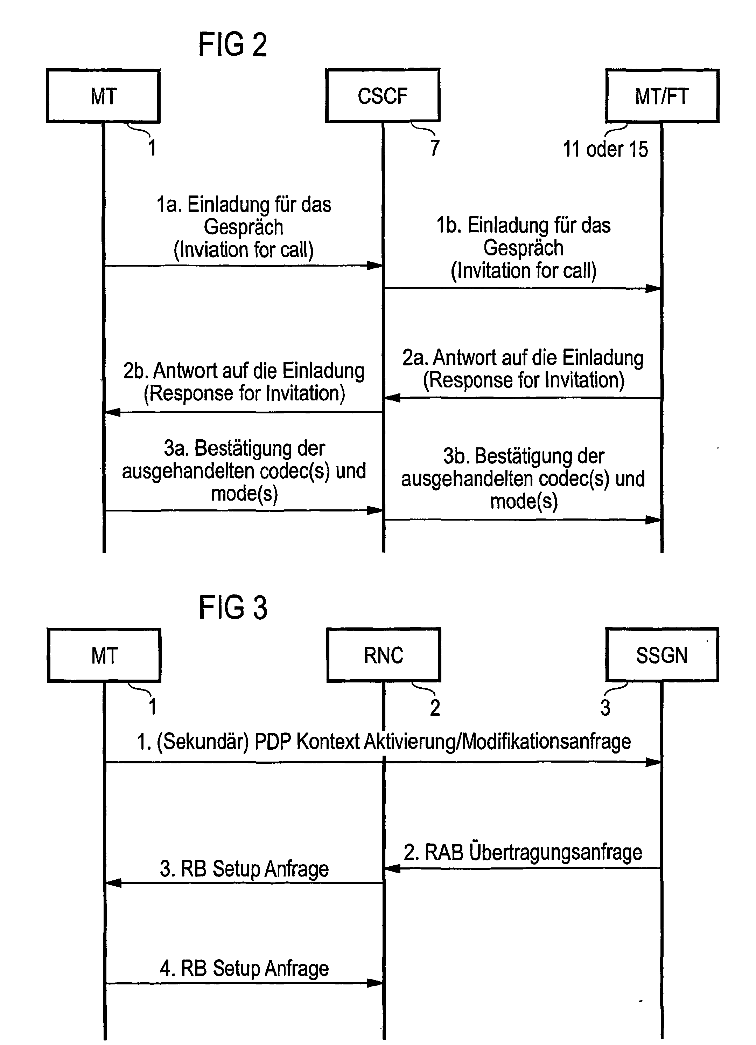

Figur 2 zeigt, wie die für einen Anruf verwendeten Codec (s) Mode(s) zwischen zwei Mobilen Endgeräten 1 und 11 die bestimmt werden. Dabei muss sichergestellt sein, dass ein Mobiles Endgerät (1) einen Träger (Bearer) für den Transport von z. B. SIP Nachrichten (messages) festgelegt hat. Die SIP Nachrichten enthalten eine Liste mit allen möglichen zu verhandelnden Codec(s) Mode(s) aus Sicht des Anrufers. Das Mobile Endgerät (1) sendet eine SIP Nachricht mit zum Beispiel SDP Informationen, die die vorgeschlagenen Codec(s) Mode(s) enthält. Das SDP Protokoll ist für den Transport von Codec(s) Mode(s) bevorzugt, jedoch können auch andere Protokolle, wie html oder xml verwendet werden. Das angerufene Mobile Endgerät (11) sendet als Antwort Codec(s) Mode(s) mit denen es das Gespräch durchführen möchte. Die Call State Control Funktion (CSCF) (7) des IP Multimedia Subsystems (IMS), welche über das IP Netzwerk (6) erreicht werden kann, kann bei der Festlegung der verwendeten Codec(s) Mode(s) eingreifen, falls andere Codec(s) Mode(s) als die von den mobilen Endgeräten (1, 11) vorgeschlagenen verwendet werden sollen. Das IP Netzwerk stellt das sogenannte Operator spezific IP Network (3GPP 29061) dar. Beide Mobile Endgeräte sind nun bereit für die Übertragung von Codec(s) Mode(s), die auf beiden Seiten umgesetzt werden können. Bei AMR kodierter Sprache muss das Mobile Endgerät die übertragenden Codec(s) Mode(s) in z. B. SDU Parameter konvertieren. Wenn die CSCF (7) oder ein anderer, bei der Übertragung der Codec(s) Mode(s) während des Gesprächsaufbaus beteiligter Knoten bereits Codec(s) Mode(s) in SDU Parameter konvertiert hat, so ist es notwendig zur Verbesserung des SDP oder des SIP Protokolls, dass die SDU Parameter an die Mobile Endgeräte (1, 11) weitergeleitet werden. Die Sequenz der SDU Parameter kann identisch sein zu den übertragenen Codec(s) Mode(s) in der SIP/SDP Liste, die die ausgehandelten Codec(s) Mode(s) enthält.

Figur 3 zeigt die Initialisierung des Access Netzwerks. Dabei kennt der SGSN (3) die Codec (s) Mode(s), die für den Anruf verwendet werden sollen. Dies geschieht z. B. über SDU Parameter. Die 3GPP Session Management Protokoll Prozeduren "Aktiviere PDP Kontext", "Modifiziere PDP Kontext" oder "Aktiviere Sekundär PDP Kontext" werden für die SDU Parameter Übertragung (mit der gleichen Sequenz, wie die korrespondierenden Codec(s) Mode(s) der Codec(s) Mode(s) Übertragung) erweitert, was die Codec(s) Mode(s) am SGSN (3) ausdrückt. Dabei wird erreicht, dass der SGSN (3) über den Typ des Dienstes nicht Bescheid weiß, was heißt, dass der SGSN (3) nicht mit allen verschiedenen Codec(s) Mode(s) initialisiert werden muss, die für einen Anruf angefragt werden könnten. Der SGSN (3) weiß also nichts von dem übertragenen Dienst. Die RANAP (RAB Zuweisung) Anfrage, welche die an die Mobile Endgeräte gegebenen SDU Parameter enthält, ruft der SGSN (3) für die Übertragung auf. Die RRC Protokoll Meldung, welche die RAB Teilströme gemäß der SDU Parameter bestimmt wird vom RNC (2) angerufen. Die Headerfelder (Transport Format Combination Identifier) TFCIs und (RAB SubFlow Combination Identifier) RFCIs in Datenpaketen sind gespeichert im RNC (2) für den Anruf gemäß der erhaltenen SDU Parameter. Die Sequenz der TFCIs und RFCIs korrespondiert mit den erhaltenen SDU Parameter. TFCIs und RFCIs werden für die Kennzeichnung der Codec(s) Mode(s) verwendet, ohne dass der RNC (2) Kenntnis über die Codec (s) Mode(s) hat. Damit muss der RNC (2) nichts von den übertragenen Diensten wissen. Wenn das Setup der RAB Teilströme erfolgreich beendet wurde, wird die RRC Protokoll Meldung gesandt von den RAB Teilströmen, dass der Verbindungsaufbau komplett ist. Die mobilen Endgeräte (1, 11), der RNC (2) und die DCF (5) sind die Instanzen, welche die Abbildung der RFCIs in SDU Parameter kennen.

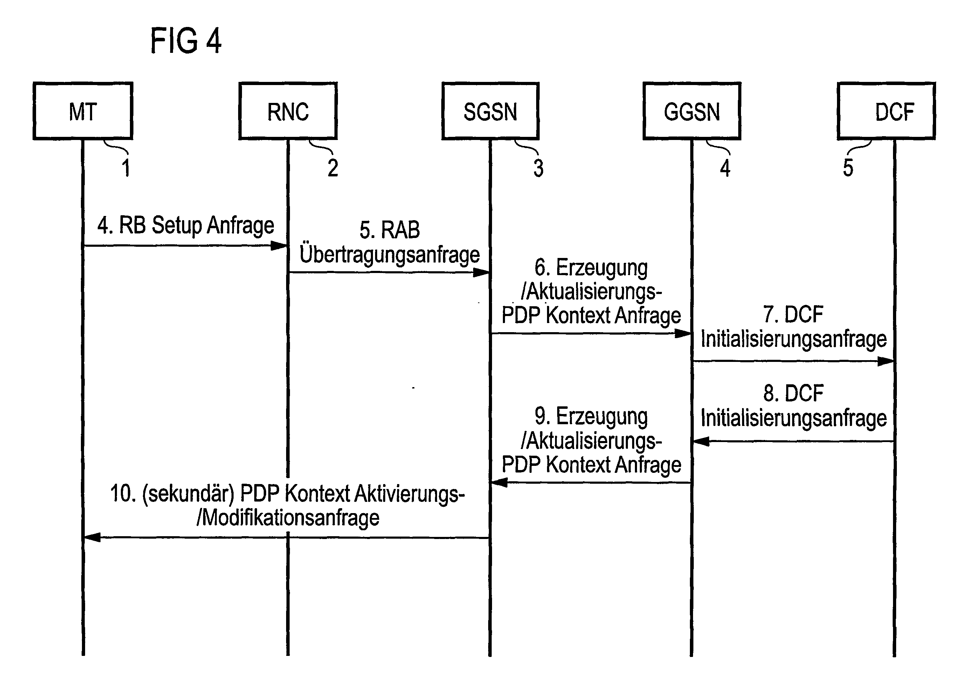

Figur 4 zeigt die Initialisierung der Codec (s) Mode(s) in einem Core Netzwerk. Für Anrufe zwischen einer Feststation und einem mobilen Endgerät sowohl als auch zwischen zwei mobilen Endgeräten weiß die DCF (5) welche RFCIs für welche SDU Parameter stehen. Damit ist die Abbildung zwischen RFCIs und deren korrespondierenden Codec(s) Mode(s) und die Umwandlung eines IP Paketes in ein OCS-Frame bereit. Alternativ kann die DCF (5) bei Anrufen zwischen zwei mobilen Endgeräten die Werte der RFCI und des angefragten RFCI austauschen, da der RNC (2) einen Typ eines SDU Parameters ausdrücken, der für einen spezifischen Codec Mode mit einen anderen RFCI als der korrespondierenden RNC (2), der das korrespondierende Empfänger Mobile Endgerät (11) bedient. Zur Vereinfachung sollten die verwendeten RFCIs die gleiche Sequenz, wie die SDU Parameter und die SIP/SDP verbundenen Codec(s) Mode(s) haben. Die DCF (5) verwendet eine Tabelle um die RFCIs und um die OCS-Frames in IP Pakete und umgekehrt konvertieren zu können. In der Tabelle sind die RFCIs und die korrespondierenden SDU Parameter, sowie die Tunnel Endpunkt Identifizierer (Tunnel Endpoint Identifier) für PDP Kontexte für das Abbilden der korrespondierenden RFCIs enthalten. Nach positiver Antwort durch die RRC Rufaufbau Meldung, antwortet der RNC (2) mit einer RANAP Meldung und fügt für den Anruf die RFCIs und ihre Bedeutung hinzu. Der SGSN (3) sendet über einen GTP-C Erweiterungs-Header die RFCIs und ihre Bedeutung zum GGSN (4). Nach Erhalt sendet der GGSN (4) die RFCIs und ihre Bedeutung zur DCF (5), wo die Initialisierung für das Gespräch stattfindet. Die DCF (5) ist nun vorbereitet für das Speichern der RFCIs und dem Konvertieren von IP Paketen in OCS-Frames und umgekehrt.

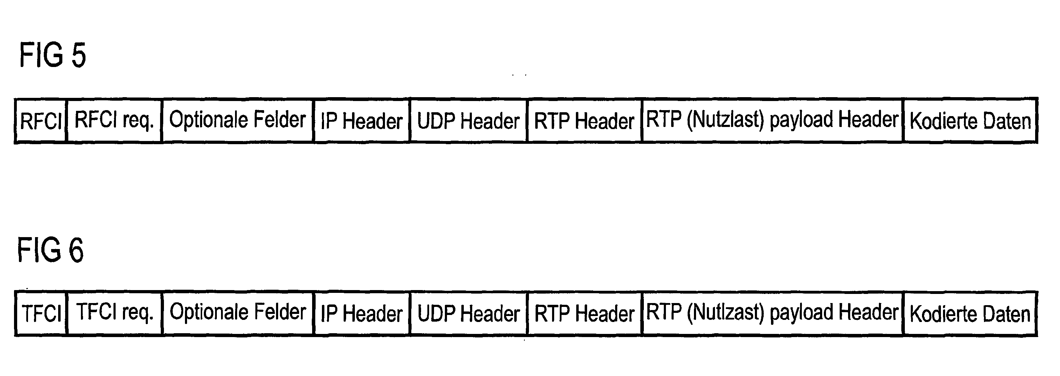

Figur 5 zeigt die Struktur eines OCS Frames. Der verwendete Codec Mode wird durch den RFCI - Wert bei dem OCS Frame. Weitere Tabellenfelder im Datenpaket können optional hinzugefügt werden. Sie müssen jedoch vom Empfänger interpretierbar sein. Das IP Header Feld beinhaltet die Informationen für die Regkonfigurierung des IP Pakets Header. Einige Informationen des OCS Frame könnten auf über einen GTP Erweiterungs-Header übermittelt werden, dies hängt jedoch von der Standardisierung bzw. Implementierung in einem Netzwerk ab.

Figur 6 zeigt die Tabelleninformationen für die Aufteilung in verschiedenen RAB Teilströme

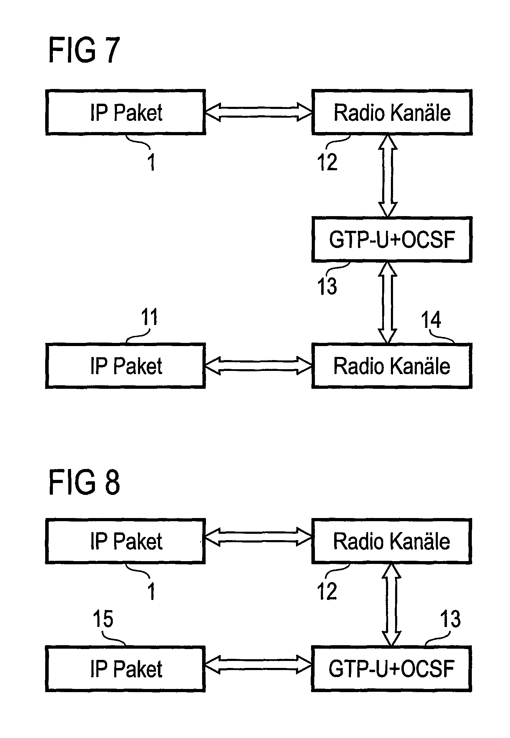

Figur 7 zeigt, wie ein IP Paket von einem mobilen Endgerät (1) über einzelne Netzwerknoten zu einem anderen mobilen Endgerät (11) übertragen wird. Ein zu versendendes IP Paket wird vom mobilen Endgerät (1) in verschiedene RAB Teilströme (12) aufgeteilt. Dabei werden die Werte für TFCI, TFCI req. und eventuell weitere Werte mit Werten, die aus dem IP Paket stammen, ausgefüllt. Die RAB Teilströme (12) transportieren das IP Paket zum RNC (2). Eine Header Kompression, wie der IP/UDP/RTP Header über die Luftschnittstelle ist optional. Im RNC (2) werden der Wert für TFCI mit dem korrespondierenden Wert für RFCI und der Wert für TFCI req. mit den korrespondierenden Wert für RFCI req. ausgetauscht. Der RNC (2) hat hierfür eine geeignete Tabelle oder ein Array. Als Resultat sind die in RAB Teilströme (12) unterteilten IP Pakete in OCS Frames konvertiert. Danach wird vom RNC der GTP-U Header erstellt und dem OCS-Frame (13) vorangestellt und über den Serving GPRS Support Knoten (SGSN) (3) zum Gateway GPRS Support Knoten (GGSN) (4) weitergeleitet. Der GGSN (4) leitet das Frame zu der Codec-Mode-Angaben-Austausch-Anordnung (DCF) (5) weiter. Bei einerzentralen DCF (5) tauscht diese die RFCI und RFCI req. Werte zwischen den beiden mobilen Endgeräten (1, 11) aus. Zusätzlich vergleicht die DCF (5) den AMR req. Wert im IP Paket mit dem RFCI req. Wert und tauscht ihn gegebenenfalls aus. Bei einem DCF (5) pro GGSN (4) entfernt die DCF (5) den RFCI und RFCI req. Wert und überschreibt den AMR req. Wert mit dem RFCI req. Wert. Gibt nur das IP Paket an den GGSN (4) zurück und dieser fügt den GTP-U Header (plus den GTP-U Erweiterungs-Header) und sendet das Paket in Richtung den Empfänger RNC (2) bei einem Anruf zwischen zwei mobilen Endgeräte (1, 11). Vorher wird das IP Paket über den Empfänger GGSN (4) zum Empfänger DCF (5) geleitet und es werden die für das Mobilfundendgerät (11) ausgehandelten RFCI und RFCI req. Werte gesetzt und wieder zum GGSN (4) zurückgesandt. Ist der Empfänger eine Feststation (15) wird das IP Paket sofort vom GGSN (4) weitergeleitet.
Der GGSN (4) kann eventuell den GTP-U Header austauschen bzw. modifizieren und das OCS Frame (13) zum SGSN (3), der dieses zum RNC (2) weiterleitet, senden. Der RNC (2) ersetzt den RFCI Wert durch den korrespondierenden TFCI Wert und den RFCI req. Wert durch den korrespondierenden TFCI req. Wert und teilt das IP Paket in mehrere RAB Teilströme (14) auf, die das IP Paket über die Luftschnittstelle zum mobilen Endgerät (11) weiterleiten.

Figur 8 zeigt die Umwandlung und das Versenden eines IP Paketes bei Anrufen zwischen einem mobilen Endgerät (1) und einer Feststation (15). Bei Anrufen von einem mobilen Endgerät (1) zu einer Feststation (15) konvertiert die DCF (5) ein IP Paket in ein OCS Frame und umgekehrt. Ein IP Paket, welches auf dem uplink (vom mobilen Endgerät zum RNC) versandt wird, wird von dem mobilen Endgerät (1) in RAB Teilströme (12) aufgeteilt und zum RNC (2) weitergeleitet. Die Werte für TFCI, TFCI req. und optionale Werte stammen dabei aus dem IP Paket (AMR und AMR req. Wert). Der IP Datenpaket Header und die verschlüsselten Daten werden ebenfalls aus dem IP Paket genommen. Eine Header-Kompression, z. B. der IP/UDP/RTP Header über die Luftschnittstelle ist optional. Der RNC (2) tauscht den TFCI Wert mit dem korrespondierenden RFCI Wert und den TFCI req. Wert mit dem korrespondierenden RFCI req. Wert aus. Damit sind die RAB Teilströme (12) in ein OCS Frame konvertiert. Danach wird vom RNC (2) der GTP-U Header dem OCS Frame vorangestellt und über den SGSN (3) zum GGSN (4) weitergeleitet. Der GGSN (4) entkapselt das OCS Frame (13) und erkennt z. B. durch einen Tunnel Endpunkt Identifizierer (Tunnel Endpoint Identifier) des GTP-U Headers, dass das OCS Frame mit GTP-U (13), das zuvor in ein IP Paket konvertiert werden muss, zu der Feststation (15) gesandt werden soll. Für die Konvertierung leitet der GGSN (4) das OCS Frame (13) ohne den GTP-U Header zum DCF (5) weiter. Das DCF (5) konvertiert das Frame und leitet es wieder an den GGSN (4) zurück. Schließlich wird das IP Paket in Richtung der Feststation (15) vom GGSN (4) weiter gesandt. Alternativ könnte das IP Paket direkt, ohne dass es wieder zum GGSN (4) zurück geleitet werden muss, durch die DCF (5) in Richtung der Feststation (15) weitergeleitet werden.
Erhält der GGSN (4) ein IP Paket von der Feststation (15) zurück, so wird es mit einem spezifischen PDP Kontext gekennzeichnet, gemäß z. B. der IP-Adresse oder dem TFT Filter, wenn mehr als ein PDP Kontext für das Mobile Endgerät (1) aktiviert ist. Mit der Kennzeichnung weiß der GGSN (4), dass er das IP Paket zum DCF (5) weiterreichen muss, damit es dort zu einem OCS Frame konvertiert wird. Zusammen mit einem Identifizierer (Identifier), der die korrespondierenden RFCIs und RFCI req. abfragt, wird das IP Paket zum Konvertieren in ein OCS Frame zur DCF (5) weitergeleitet und danach wieder zurück zum GGSN (4). Als nächstes wird der GTP-U Header dem OCS Frame vorangestellt und zum SGSN (3) gesendet, der dieses Frame (13) zum RNC (2) weiterleitet. Nachdem der GTP-U Header entfernt wurde, tauscht der RNC (2) den RFCI Wert mit dem korrespondierenden TFCI Wert und den RFCI req. Wert mit dem korrespondierenden TFCI req. Wert aus, teilt das IP Paket in RAB Teilströme (12) auf und sendet es zum mobilen Endgerät (1), das es wieder zusammensetzt.

### Ausführung einer Codec Mode Wechsel Aufforderung beim mobilen Endgerät

Die Anfrage zum Digitalisieren von Daten mit einem anderen Codec Mode wird in-band durch eine Applikation, die sich in einem mobilen Endgerät, einem Computer oder ähnlichem befindet, von dem Mobilfunknetz erhalten. Ein Codec Mode Wechsel wird vom RNC (2) veranlasst. Dies kann uplink durch das Mobile Endgerät (1, 11) geschehen, das durch den TFCI req. Wert einen bestimmten Codec Mode anfordert und vom RNC beaufsichtigt wird und downlink wird das Empfänger Mobile Endgerät (1, 11) aufgefordert über den RFCI req. Wert einen anderen Codec Mode zu verwenden. Dieser Wert wird vom RNC (2) beaufsichtigt und wenn gegebenenfalls korrigiert bevor er ihn in den TFCI req. Wert tauscht. Er kann auch vom Mobilen Endgerät (z. B. mit einem RTP Nutzlast (payload) header Feld AMR req.), unter Aufsicht des RNC (2), veranlasst werden. Wegen der Luftschnittstellen-Qualitäts-Berichte, die von einem kodierten Daten empfangenden Mobilen Endgerät (11) an das bedienende RNC (2) gesandt werden, oder durch einen Auslöser (Trigger), wie z. B. die Tageszeit, kann der RNC (2) an dem sendenden Mobilen Endgerät (1) einen Codec Mode Wechsel anfordern, der durch Modifizierung des RFCI req. Wertes des OCS Frames, das an das sendende Mobilen Endgerät gesandt wird, realisiert wird. Der RNC (2) kann die Anfrage nach einem Codec Mode Wechsel über den SGSN (3) gemäß der aktuellen Situation (z. B. aktuell verwendete Bandbreite und Tageszeit) beeinflussen. Das Mobile Endgerät erhält eine Codec Mode Wechsel Anfrage über den TFCI req. Wert. Die Applikation im Mobilen Endgerät erhält die gleiche Codec Mode Wechsel Anfrage über einen Feld-Wert aus dem IP Paket; wie z. B. den RTP Nutzlast (payload) Header Feld (field) AMR req. IF 1. Danach wird das IP Paket digitalisiert mit dem angefragten Codec Mode, zur Lower Layer (Unteren Schicht) (z. B. PDCP Layer) weitergeleitet. Der Lower Layer kann das Feld, welche die Informationen über die verwendete Codec Mode enthält, des IP Paketes interpretieren. Als Resultat überprüft er die erhaltenen IP Pakete nach dem Codec Mode, der mit dem TFCI req. Wert korreliert und lässt entweder das IP Paket passieren oder verwirft es. Das Mobile Endgerät kodiert Daten mit der Codec Mode, die vom RNC (2) angefragt wurde. Andererseits fällt die Qualität des Anrufs dramatisch wegen der verlorenen Pakete.

### Ausführung einer Codec Mode Wechsel Anfrage bei der DCF

Die DCF erhält die Codec Mode Wechsel Anfrage in Form eines RFCI req. Wertes. Die Applikation erhält die gleiche Anfrage in Form eines entsprechenden Feldes im IP Paket. Die Applikation, die sich auf einer Feststation befindet, kodiert weiterhin Daten mit dem angefragten Codec Mode, den es aus dem entsprechenden Feld im IP Paket hat. Danach wird das IP Paket mit dem angefragten Codec Mode über den GGSN (4) zum DCF (5) gesendet.

Als Resultat überprüft die DCF (5) in diesem erhaltenen IP Paket den Codec Mode, ob er mit dem RFCI req. Wert korreliert und lässt entweder das IP Paket passieren oder verwirft es. Die Übertragung der IP Pakete über die Luftschnittstelle kann transcodiert oder nicht transcodiert geschehen.

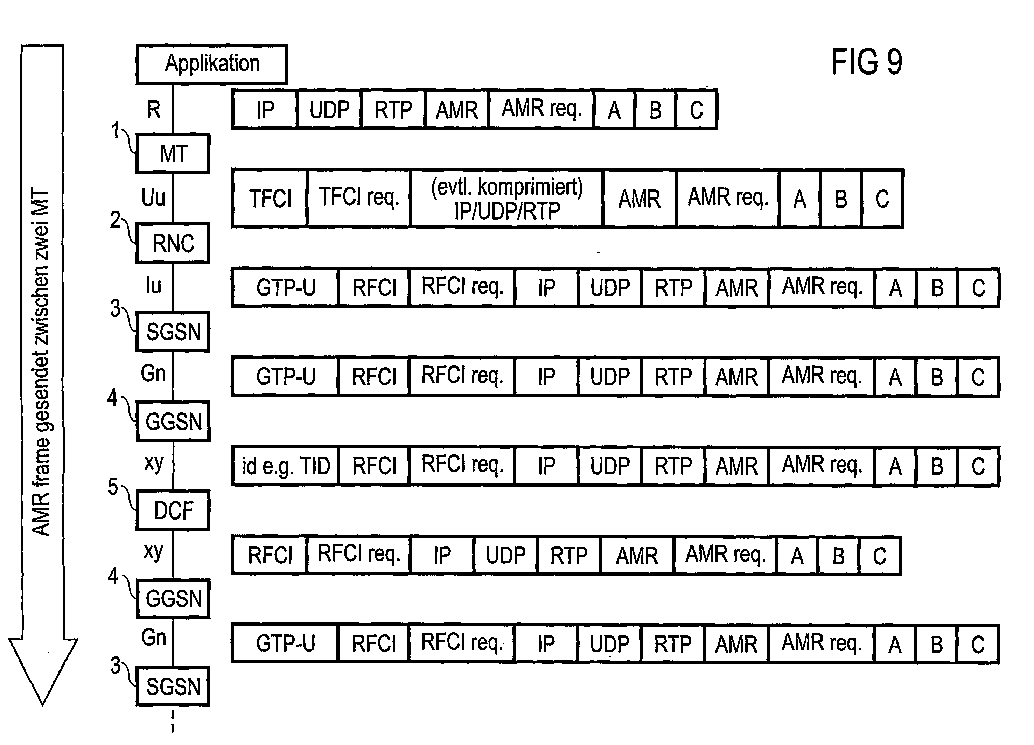

Figur 9 zeigt das Aussehen des Datenpakets an den einzelnen Stationen bei einen Anruf zwischen zwei Mobilen Endgeräten. Die Reihenfolge der Felder wird aufgrund der Implementierung und der Standardisierung festgelegt. Die Information (RFCI/TFCI - Wert und AMR-Wert, RFCI req./TFCI req. - Wert und AMR req. - Wert) über die Codec Mode werden in dem vorliegenden Beispiel doppelt übertragen. Um dies noch zu beseitigen, wird zwischen dem Mobilen Endgerät (1, 11) und der DCF der RTP Nutzlast (payload) Header (enthält AMR Wert und AMR req. Wert) modifiziert, dies bedeutet, dass ein IETF Protokoll geändert wird.

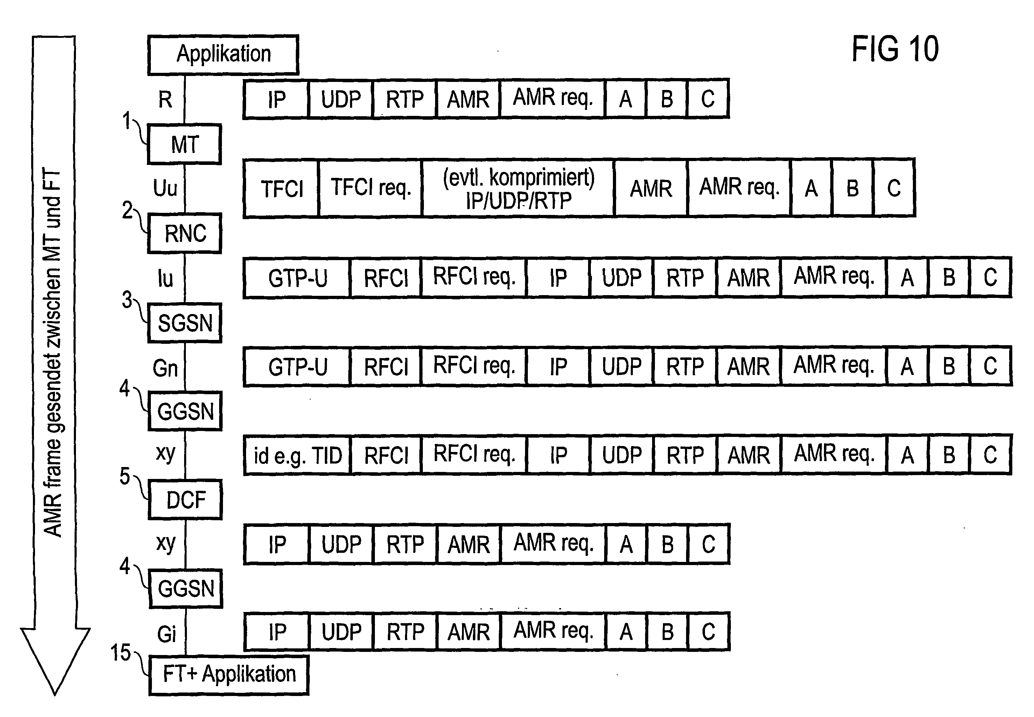

Figur 10 zeigt das Aussehen des Datenpakets an den einzelnen Stationen bei einem Anruf zwischen einem Mobilen Endgerät und einer Feststation. Die Reihenfolge der Felder wird aufgrund der Implementierung und der Standardisierung festgelegt.

## Patentansprüche

1. Verfahren zum Übertragen von IP-Paketen zwischen einem Radio Network Controller (RNC) (2) und einer weiteren Einrichtung eines Mobilfunknetzwerkes,
**dadurch gekennzeichnet,**
**dass** ein zu übertragendes IP-Paket eine erste Codec-Mode-Angabe TFCI, AMR, enthält, welche angibt, mit welchem Codec-Mode TFCI, AMR, es von einem Mobilen Endgerät (MT) (1) zu einem ersten Radio Network Controller (RNC) (2) übertragen wurde,
**dass** eine von einem IP-Paket auf dem Weg durch das Mobilfunknetz durchlaufene Codec-Mode-Angaben-Austausch-Anordnung (DCF) (5) einen Austausch der im Datenpaket enthaltenen ersten Codec-Mode-Angabe RFCI, AMR, durch eine zweite, einer weiteren Einrichtung oder mobilen Endgerät (MT) (1) bekannte, gemäß in einer gespeicherten Tabelle in der Codec-Mode-Angaben-Austausch-Anordnung (5) zur ersten Codec-Mode-Angabe korrespondierende zweite Codec-Mode-Angabe, RFCI requested, vornimmt,
**dass** das IP-Paket, welches die zweite Codec-Mode-Angabe enthält, zur weiteren Einrichtung weitergesandt wird.

2. Verfahren nach Anspruch 1,
**dadurch gekennzeichnet,**
**dass** als weitere Einrichtung eines Mobilfunknetzes ein Radio Network Controller (RNC) (2) bei einem Anruf zwischen zwei mobilen Endgeräten (1, 11) verwendet wird.

3. Verfahren nach einem der vorhergehenden Ansprüche,
**dadurch gekennzeichnet,**
**dass** als weitere Einrichtung eines Mobilfunknetzes eine Schnittstelle, Gateway, bei einem Anruf zwischen einem mobilen Endgerät (1) und einer Feststation (15) verwendet wird.

4. Verfahren nach einem der vorhergehenden Ansprüche,
**dadurch gekennzeichnet,**
**dass** in einer Tabelle einer Codec-Mode-Angaben-Korrespondenz-Speichereinrichtung (5) bei Initialisieren einer Verbindung zwischen zwei Mobilen Endgeräten (MT) (1, 11) mindestens eine erste Codec-Mode-Angabe, TFCI, AMR, und zugehörige zweite Codec-Mode-Angabe, TFCI requested, AMR requested, abgespeichert wird.

5. Verfahren nach einem der vorhergehenden Ansprüche,
**dadurch gekennzeichnet,**
**dass** in einem von einem Mobilen Endgerät kommenden, eine Code-Mode-Angabe in Form eines TFCI-Wertes und AMR-Wertes enthaltenden Datenpaket von dem das Datenpaket empfangenden Radio Network Controller (RNC) (2) der TFCI-Wert gegen eine Codec-Mode-Angabe in Form eines RFCI-Wertes ausgetauscht wird.

6. Verfahren nach einem der vorhergehenden Ansprüche,
**dadurch gekennzeichnet,**
**dass** die TFCI-Angaben und die RFCI-Angaben einen Codec-Mode repräsentieren.

7. Verfahren nach einem der vorhergehenden Ansprüche,
**dadurch gekennzeichnet,**
**dass** für Anrufe zwischen Mobilen Endgeräten (MT) (1, 11) der Radio Netzwerk Controller (RNC) (2) SDU Parameter, die einen spezifischen Codec-Mode mit einem RFCI-Wert repräsentieren, ausgeben kann, der von der Codec-Mode-Angaben-Austausch-Anordnung (DCF) (5) mit dem RFCI-Wert und dem angefragten RFCI-Wert ausgetauscht wird.

8. Verfahren nach einem der vorhergehenden Ansprüche,
**dadurch gekennzeichnet,**
**dass** das IP Paket in ein Optimized Codec Support Frame-Format, OCSF, für den Transport in einem GTP Tunnel konvertiert und in RAB Teilströme (12) für den Transport zwischen Radio Network Controller (RNC) (2) und Mobiles Endgerät (MT) (1) aufgeteilt wird.

9. Verfahren nach einem der vorhergehenden Ansprüche,
**dadurch gekennzeichnet,**
**dass** die Art des Codec Modes im Optimized Codec Support Frame, OCSF, durch den RFCI Wert angezeigt ist,
**dass** der Mode, mit welchem der Sender die Daten kodieren möchte im Optimized Codec Support Frame, OCSF, durch den RFCI requested - Wert angezeigt wird,
**dass** die Reihenfolge der Felder abhängig von der Implementierung und Standardisierung ist und
**dass** andere Felder bei Bedarf hinzugefügt werden, wenn der Empfänger für deren Interpretation vorbereitet ist.

10. Verfahren nach einem der vorhergehenden Ansprüche,
**dadurch gekennzeichnet,**
**dass** ein von einem Mobilen Endgerät (MT) (1) gesendetes IP Paket in RAB Teilströme (12) aufgeteilt und mit Werten für TFCI und TFCI requested versehen und zum Radio Network Controller (RNC) (2) gesandt wird.

11. Verfahren nach einem der vorhergehenden Ansprüche,
**dadurch gekennzeichnet,**
**dass** im Radio Network Controller (RNC) (2) der TFCI-Wert und der TFCI requested - Wert mit dem korrespondierenden RFCI-Wert dem RFCI requested - Wert des Optimized Codec Support Frame, OCSF, ausgetauscht werden.

12. Verfahren nach einem der vorhergehenden Ansprüche,
**dadurch gekennzeichnet,**
**dass** dem Optimized Codec Support Frame, OCSF, der GTP-U header vom Radio Network Controller (RNC) vorangestellt und zum Gateway GPRS Support Knoten (GGSN) (4) über den Serving GPRS Support Knoten (SGSN) (3) weiter geleitet wird.

13. Verfahren nach einem der vorhergehenden Ansprüche,
**dadurch gekennzeichnet,**
**dass** der Optimized Codec Support Frame, OCSF, vom Gateway GPRS Support Knoten (GGSN) an die Codec-Mode-Angaben-Austausch-Anordnung (DCF) (5) weitergeleitet wird,
**dass** die korrespondierenden RFCI-Werte und RFCI requested - Werte mit dem Codec Mode des Empfänger Mobilen Endgerätes (MT) (1) abgeglichen werden,
**dass** der modifizierte Optimized Codec Support Frame (OCSF) an den Gateway GPRS Support Knoten (GGSN) (4) zurückgesandt wird.

14. Verfahren nach einem der vorhergehenden Ansprüche,
**dadurch gekennzeichnet,**
**dass** das IP Paket durch die Codec-Mode-Angaben-Austausch-Anordnung (DCF) (5) modifiziert wird,
**dass** vom Gateway GPRS Support Knoten (GGSN) (4) mindestens ein weiteres Mal die Codec-Mode-Angaben-Austausch-Anordnung (DCF) (5) für die Generierung des Optimized Codec Support Frame, OCSF, angerufen wird,
**dass** mindestens ein Gateway GPRS Support Knoten (GGSN) (4) beteiligt ist.

15. Verfahren nach einen der vorhergehenden Ansprüche,
**dadurch gekennzeichnet,**
**dass** vom Gateway GPRS Support Knoten (GGSN) (4) der GTP-U header modifiziert bzw. ausgetauscht wird und der Optimized Codec Support Frame, OCSF, zum Serving GPRS Support Knoten (SGSN) (3), der es zum Radio Network Controller (RNC) (2) weiterleitet, übermittelt wird,
**dass** vom Radio Network Controller (RNC) (2) der RFCI-Wert mit dem korresponierenden TFCI-Wert ausgewechselt wird, dass der RFCI requested gegen dem TFCI requested Wert ausgetauscht bzw. modifiziert wird,
**dass** das IP-Paket über die RAB Teilströme (12) an das Mobile Endgerät (MT) (1) gesandt wird.

16. Verfahren nach einem der vorhergehenden Ansprüche,
**dadurch gekennzeichnet,**
**dass** der Optimized Codec Support Frame, OCSF, bevor es zu einer Feststation (FT) (15) gesandt wird, von der Codec-Mode-Angaben-Austausch-Anordnung (DCF) (5) in ein IP Paket konvertiert wird,
**dass** das IP Paket von der Codec-Mode-Angaben-Austausch-Anordnung (DCF) (5) an den Gateway GPRS Support Knoten (GGSN) (4) oder direkt in Richtung Feststation (FT) (15) gesendet wird.

17. Verfahren nach einem der vorhergehenden Ansprüche,
**dadurch gekennzeichnet,**
**dass** der Codec Mode Wechsel durch den Radio Network Controller (RNC) (2) ausgelöst wird,
**dass** der Codec Mode Wechsel in dem Mobilen Endgerät (MT) (1) unter Aufsicht des Radio Network Controller (RNC) (2) ausgelöst wird.

18. Vorrichtung zum Selektieren von zwischen Endgeräten übertragenen mit ausgehandelten Codec Modes kodierten , Datenpaketen eines Mobilfunknetzwerkes.
**dadurch gekennzeichnet,**
**dass** sie eine in einer zentralen Codec-Mode-Angaben-Austausch-Anordnung (DCF) (5) gespeicherten Tabelle zum Vergleich des RFCI-Wertes mit einem zweiten RFCI Wert aufweist,
**dass** die Vorrichtung (DCF) (5) eine Einrichtung zum Konvertieren von IP-Datenpaketen in Optimized Codec Support Frames, OCSF, und zum Vergleichen der gelisteten RFCI-Werte mit den in den Datenpaketen angegebenen RFCI-Werte umfasst,
**dass** die Vorrichtung (DCF) (5) eine Einrichtung zum Rückkonvertieren von Optimized Codec Support Frame, OSCF, in IP-Datenpaketen umfasst.

19. Vorrichtung nach Anspruch 16
**dadurch gekennzeichnet,**
**dass** die Vorrichtung (DCF) (5) eine Einrichtung des Gateway GPRS Support Knotens (GGSN) (4) oder eines anderen Knotens ist.

20. Vorrichtung nach Anspruch 16
**dadurch gekennzeichnet,**
**dass** die Vorrichtung (DCF) (5) ein eigener Knoten mit Zugang über ein IP Protokoll ist.

## Claims

1. Method for transmitting IP packets between a radio network controller (RNC) (2) and a further element of a mobile radio network,
**characterised in that**
an IP packet to be transmitted contains a first codec mode indication TFCI, AMR which indicates the codec mode TFCI, AMR with which it was transmitted from a mobile terminal (MT) (1) to a first radio network controller (RNC) (2),
a codec mode indication exchange arrangement (DCF) (5) passed through by an IP packet on its way through the mobile radio network exchanges the first codec mode indication RFCI, AMR contained in the data packet for a second codec mode indication RFCI requested corresponding to the first codec mode indication in accordance with a stored table in the codec mode indication exchange arrangement (5) and known to a further element or mobile terminal (MT) (1),
the IP packet which contains the second codec mode indication is forwarded to the further element.

2. Method according to claim 1,
**characterised in that**
a radio network controller (RNC) (2) is used as the further element of a mobile radio network when a call is made between two mobile terminals (1, 11).

3. Method according to one of the preceding claims,
**characterised in that**
an interface (gateway) is used as the further element of a mobile radio network when a call is made between a mobile terminal (1) and a base station (15).

4. Method according to one of the preceding claims,
**characterised in that**
upon initialisation of a connection between two mobile terminals (MT) (1, 11) at least one first codec mode indication TFCI, AMR and associated second codec mode indication TFCI requested, AMR requested are stored in a table of a codec mode indication correspondence storage device (5).

5. Method according to one of the preceding claims,
**characterised in that**
in a data packet coming from a mobile terminal and containing a codec mode indication in the form of a TFCI value and AMR value, the TFCI value is exchanged for a codec mode indication in the form of an RFCI value by the radio network controller (RNC) (2) receiving the data packet.

6. Method according to one of the preceding claims,
**characterised in that**
the TFCI indications and the RFCI indications represent a codec mode.

7. Method according to one of the preceding claims,
**characterised in that**
for calls between mobile terminals (MT) (1, 11) the radio network controller (RNC) (2) can output SDU parameters which represent a specific codec mode with an RFCI value which is exchanged by the codec mode indication exchange arrangement (DCF) (5) for the RFCI value and the requested RFCI value.

8. Method according to one of the preceding claims,
**characterised in that**
the IP packet is converted into an optimised codec support frame format OCSF for transport in a GTP tunnel and subdivided into RAB subflows (12) for transport between the radio network controller (RNC) (2) and mobile terminal (MT) (1).

9. Method according to one of the preceding claims,
**characterised in that**
the type of the codec mode is indicated in the optimised codec support frame OCSF by the RFCI value,
the mode with which the sender wishes to encode the data is indicated in the optimised codec support frame OCSF by the RFCI requested value,
the sequence of fields is dependent on the implementation and standardisation and
other fields are added as required if the recipient is ready to interpret them.

10. Method according to one of the preceding claims,
**characterised in that**
an IP packet sent by a mobile terminal (MT) (1) is subdivided into RAB subflows (12) and provided with values for TFCI and TFCI requested and sent to the radio network controller (RNC) (2).

11. Method according to one of the preceding claims,
**characterised in that**
in the radio network controller (RNC) (2) the TFCI value and the TFCI requested value are exchanged for the corresponding RFCI value and RFCI requested value of the optimised codec support frame OCSF.

12. Method according to one of the preceding claims,
**characterised in that**
the GTP-U header is prefixed to the optimised codec support frame OCSF by the radio network controller (RNC) and forwarded to the gateway GPRS support node (GGSN) (4) via the serving GPRS support node (SGSN) (3).

13. Method according to one of the preceding claims,
**characterised in that**
the optimised codec support frame OCSF is forwarded by the gateway GPRS support node (GGSN) to the codec mode indication exchange arrangement (DCF) (5),
the corresponding RFCI values and RFCI requested values are aligned with the codec mode of the recipient mobile terminal (MT) (1),
the modified optimised codec support frame (OCSF) is sent back to the gateway GPRS support node (GGSN) (4).

14. Method according to one of the preceding claims,
**characterised in that**
the IP packet is modified by the codec mode indication exchange arrangement (DCF) (5),
the codec mode indication exchange arrangement (DCF) (5) is called at least one further time by the gateway GPRS support node (GGSN) (4) to generate the optimised codec support frame OCSF,
at least one gateway GPRS support node (GGSN) (4) is involved.

15. Method according to one of the preceding claims,
**characterised in that**
the GTP-U header is modified or exchanged by the gateway GPRS support node (GGSN) (4) and the optimised codec support frame OCSF is transmitted to the serving GPRS support node (SGSN) (3), which forwards it to the radio network controller (RNC) (2),
the RFCI value is exchanged by the radio network controller (RNC) (2) for the corresponding TFCI value,
the RFCI requested value is exchanged for the TFCI requested value or modified,
the IP packet is sent to the mobile terminal (MT) (1) via the RAB subflows (12).

16. Method according to one of the preceding claims,
**characterised in that**
before being sent to a base station (FT) (15) the optimised codec support frame OCSF is converted into an IP packet by the codec mode indication exchange system (DCF) (5),
the IP packet is sent by the codec mode indication exchange arrangement (DCF) (5) to the gateway GPRS support node (GGSN) (4) or directly in the direction of the base station (FT) (15).

17. Method according to one of the preceding claims,
**characterised in that**
the codec mode change is initiated by the radio network controller (RNC) (2),
the codec mode change is initiated in the mobile terminal (MT) (1) under the supervision of the radio network controller (RNC) (2).

18. Device for selecting data packets of a mobile radio network that are transmitted between terminals and encoded with negotiated codec modes,
**characterised in that**
it has a table stored in a central codec mode indication exchange arrangement (DCF) (5) for comparing the RFCI value with a second RFCI value,
the device (DCF) (5) includes an element for converting IP data packets into optimised codec support frames (OCSF) and
for comparing the listed RFCI values with the RFCI values specified in the data packets,
the device (DCF) (5) includes an element for converting optimised codec support frames OCSF back into IP data packets.

19. Device according to claim 18,
**characterised in that**
the device (DCF) (5) is an element of the gateway GPRS support node (GGSN) (4) or of another node.

20. Device according to claim 18,
**characterised in that**
the device (DCF) (5) is a separate node with access via an IP protocol.

## Revendications

1. Procédé pour la transmission de paquets IP entre un contrôleur de réseau radio (RNC) (2) et un autre appareil d'un réseau de téléphonie mobile,
**caractérisé**
**en ce qu'**un paquet IP à transmettre contient une première indication du mode Codec TFCI, AMR, qui indique avec quel mode Codec TFCI, AMR, il a été transmis d'un terminal mobile (MT) (1) à un premier contrôleur de réseau radio (RNC) (2),
**en ce qu'**un dispositif d'échange d'informations de mode Codec (DCF) (5) traversé par un paquet IP sur le chemin passant par le réseau de téléphonie mobile effectue un remplacement de la première indication de mode Codec RFCI, AMR, contenue dans le paquet de données par une seconde indication de mode Codec, RFCI requested, connue d'un autre appareil ou d'un terminal mobile (MT) (1), correspondant à la première indication de mode Codec selon un tableau mémorisé dans le dispositif d'échange d'informations sur le mode Codec (5),
**en ce que** le paquet IP, qui contient la seconde indication de mode Codec, est envoyé de nouveau à l'autre appareil.

2. Procédé selon la revendication 1,
**caractérisé en ce que**
comme autre appareil d'un réseau de téléphonie mobile, on utilise un contrôleur de réseau radio (RNC) (2) lors d'un appel entre deux terminaux (1, 11).

3. Procédé selon l'une quelconque des revendications précédentes,
**caractérisé en ce que**
comme autre appareil d'un réseau de téléphonie mobile, on utilise une interface, gateway, lors d'un appel entre un terminal (1) mobile et une station fixe (15).

4. Procédé selon l'une quelconque des revendications précédentes,
**caractérisé en ce que**,
dans un tableau d'un dispositif de mémorisation de correspondance d'indications de mode Codec (5), lors de l'initialisation d'une liaison entre deux terminaux mobiles (MT) (1, 11), on mémorise au moins une première indication de mode Codec, TFCI, AMR, et une seconde indication correspondante de mode Codec, TFCI requested, AMR requested, correspondante.

5. Procédé selon l'une quelconque des revendications précédentes,
**caractérisé en ce que**
dans un paquet de données arrivant d'un terminal mobile, contenant une indication de mode code sous la forme d'une valeur TFCI et d'une valeur AMR, la valeur TFCI est remplacée par le contrôleur de réseau radio (RNC) (2) recevant le paquet de données par une indication de mode Codec sous la forme d'une valeur RFCI.

6. Procédé selon l'une quelconque des revendications précédentes,
**caractérisé en ce que**
les indications TFCI et les indications RFCI représentent un mode Codec.

7. Procédé selon l'une quelconque des revendications précédentes,
**caractérisé en ce que**
pour des appels entre les terminaux mobiles (MT) (1, 11), le contrôleur de réseau radio (RNC) (2) peut sortir des paramètres SDU, qui représentent un mode Codec spécifique avec une valeur RFCI, qui est remplacée par le dispositif d'échange d'indications de mode Codec (DCF) (5) avec la valeur RFCI et la valeur RFCI demandée.

8. Procédé selon l'une quelconque des revendications précédentes,
**caractérisé en ce que**
le paquet IP est converti en un format de Optimized Codec Support Frame, OCSF, pour le transport dans un tunnel GTP et est subdivisé en flux partiels RAB (12) pour le transport entre le contrôleur de réseau radio (RNC) (2) et le terminal mobile (MT) (1).

9. Procédé selon l'une quelconque des revendications précédentes,
**caractérisé**
**en ce que** la nature du mode Codec dans l'Optimized Codec Support Frame, OCSF, est indiquée par la valeur RFCI,
**en ce que** le mode, avec lequel l'émetteur voudrait coder les données, est indiqué dans l'Optimized Codec Support Frame, OCSF, par la valeur RFCI requested,
**en ce que** l'ordre de succession des champs est dépendant de la mise en application et de la standardisation et en ce que d'autres champs sont ajoutés le cas échéant si le destinataire est préparé pour leur interprétation.

10. Procédé selon l'une quelconque des revendications précédentes,
**caractérisé en ce que**
un paquet IP envoyé par un terminal mobile (MT) (1) est subdivisé en flux partiels RAB (12) et est accompagné de valeurs pour TFCI et TFCI requested et envoyé au contrôleur de réseau radio (RNC) (2).

11. Procédé selon l'une quelconque des revendications précédentes,
**caractérisé en ce que**
dans le contrôleur de réseau radio (RNC) (2), la valeur TFCI et la valeur TFCI requested sont remplacées par la valeur RFCI et la valeur RFCI requested correspondantes de la Optimized Codec Support Frame, OCSF.

12. Procédé selon l'une quelconque des revendications précédentes,
**caractérisé en ce que**
l'en-tête GTP-U est placé par le contrôleur de réseau radio (RNC) avant la Optimized Codec Support Frame, OCSF, et est retransmis au noeud Gateway GPRS Support (GGSN) (4) via le noeud Serving GPRS Support (SGSN) (3).

13. Procédé selon l'une quelconque des revendications précédentes,
**caractérisé**
**en ce que** la Optimized Codec Support Frame, OCSF, est transmise du noeud Gateway GPRS Support (GGSN) au dispositif d'échange d'indication de mode Codec (DCF) (5), en ce que les valeurs RFCI et RFCI requested correspondantes sont ajustées avec le mode Codec du terminal mobile récepteur (MT) (1),
**en ce que** la Optimized Codec Support Frame, OCSF, modifiée est retournée au noeud Gateway GPRS Support (GGSN) (4).

14. Procédé selon l'une quelconque des revendications précédentes,
**caractérisé**
**en ce que** le paquet IP est modifié par le dispositif d'échange d'indication de mode Codec (DCF) (5),
**en ce que** le dispositif d'échange d'indications de mode Codec (DFC) (5) est appelé par le noeud Gateway GPRS Support (GGSN) (4) au moins une autre fois pour la génération de la Optimized Codec Support Frame, OCSF,
**en ce qu'**au moins un noeud Gateway GPRS Support (GGSN) (4) est impliqué.

15. Procédé selon l'une quelconque des revendications précédentes,
**caractérisé**
**en ce que** l'en-tête GTP-U est modifié resp. remplacé par le noeud Gateway GPRS Support (GGSN) (4) et la Optimized Codec Support Frame, OCSF, est transmise au noeud Serving GPRS Support (SGSN) (3), qui la transmet au contrôleur de réseau radio (RNC) (2),
**en ce que** le contrôleur de réseau radio (RNC) (2) remplace la valeur RFCI par la valeur TFCI correspondante,
**en ce que** la valeur RFCI requested est remplacée resp. modifiée par la valeur TFCI requested,
**en ce que** le paquet IP est envoyé par les flux partiels RAB (12) au terminal mobile (MT) (1).

16. Procédé selon l'une quelconque des revendications précédentes,
**caractérisé**
**en ce que** la Optimized Codec Support Frame, OCSF, est convertie par le dispositif d'échange d'indications de mode Codec (DCF) (5) en un paquet IP avant qu'elle soit envoyée à une station fixe (FT) (15),
**en ce que** le paquet IP est envoyé par le dispositif d'échange d'indications de mode Codec (DCF) (5) au noeud Gateway GPRS Support (GGSN) (4) ou directement en direction de la station fixe (FT) (15).

17. Procédé selon l'une quelconque des revendications précédentes,
**caractérisé**
**en ce que** le changement de mode Codec est déclenché par le contrôleur de réseau radio (RNC) (2),
**en ce que** le changement de mode Codec dans le terminal mobile (MT) (1) est déclenché sous la surveillance du contrôleur de réseau radio (RNC) (2).

18. Dispositif pour la sélection de paquets de données, transmis entre des terminaux et codés avec des modes Codec négociés, d'un réseau de téléphonie mobile,
**caractérisé**
**en ce qu'**il présente un tableau mémorisé dans un dispositif central d'échange d'indications de mode Codec (DCF) (5) pour la comparaison de la valeur RFCI avec une seconde valeur RFCI,
**en ce que** le dispositif (DCF) (5) comprend un appareil pour la conversion de paquets de données IP dans des Optimized Codec Support Frames, OCSF, et pour la comparaison des valeurs RFCI listées avec les valeurs RFCI indiquées dans les paquets de données,
**en ce que** le dispositif (DCF) (5) comprend un appareil pour la reconversion de Optimized Codec Support Frame, OCSF, en paquets de données IP.

19. Dispositif selon la revendication 16,
**caractérisé en ce que**
le dispositif (DCF) (5) est un appareil du noeud Gateway GPRS Support (GGSN) (4) ou d'un autre noeud.

20. Dispositif selon la revendication 16,
**caractérisé en ce que**
le dispositif (DCF) (5) est un noeud propre avec accès au moyen d'un protocole IP.
